## Europäisches Patentamt
## European Patent Office
## Office européen des brevets

(11) Veröffentlichungsnummer : **0 090 983**
**B1**

(12) **EUROPÄISCHE PATENTSCHRIFT**

(45) Veröffentlichungstag der Patentschrift :
30.10.85

(21) Anmeldenummer : 83102686.9

(22) Anmeldetag : 18.03.83

(51) Int. Cl.⁴ : **F 01 P 7/04**, F 16 H 41/30,
F 16 D 33/18

(54) Hydrodynamische Kraftübertragungsvorrichtung.

(30) Priorität : 03.04.82 DE 3212505

(43) Veröffentlichungstag der Anmeldung :
12.10.83 Patentblatt 83/41

(45) Bekanntmachung des Hinweises auf die Patenterteilung : 30.10.85 Patentblatt 85/44

(84) Benannte Vertragsstaaten :
DE FR GB IT

(56) Entgegenhaltungen :
EP-A- 0 012 015
DE-B- 1 079 894
DE-B- 1 286 840
DE-C-   921 181
GB-A-   857 746

(73) Patentinhaber : KHD Canada Inc. DEUTZ R & D
Division
4660 Hickmore St.
Montreal/Quebec (CA)

(72) Erfinder : Slezak, Paul John
12486 Toulouse Street
Pierrefonds Quebec (CA)

(74) Vertreter : Nau, Walter, Dipl.-Ing.
Johann-Pullem-Strasse 8
D-5000 Köln 50 (Sürth) (DE)

Jouve, 18, rue St-Denis, 75001 Paris, France

## Beschreibung

Die Erfindung bezieht sich auf eine hydrodynamische Kraftübertragungsvorrichtung, die zur Füllungsregelung mit einem Zulauf und mit einem Ablaß versehen ist, sowie mit einem Pumpenrad, das mit einer Antriebseinrichtung drehfest verbunden ist sowie mit einem mit einer Abtriebswelle drehfest verbundenen Turbinenrad und mit zumindest einem Gehäuseteil zur Lagerung der Kraftübertragungsvorrichtung, wobei zur Lagerung der Antriebseinrichtung und der Kraftübertragungsvorrichtung drucköölversorgte Lagerstellen vorgesehen sind.

Vorzugsweise kann eine derartige hydrodynamische Kraftübertragungsvorrichtung, die üblicherweise auch als hydrodynamische Kupplung bezeichnet wird, zum Antrieb eines Kühlluftgebläses von Brennkraftmaschinen Einsatz finden. Insbesondere bei luftgekühlten Brennkraftmaschinen dient eine derartige hydrodynamische Kupplung dazu, die Kühlgebläsedrehzahl zu regeln, indem der Kraftübertragungsvorrichtung mengenmäßig steuerbar Steuerflüssigkeit zugeführt wird und so der Füllungsgrad der Kupplung in Abhängigkeit von einer charakteristischen Betriebskenngröße der Brennkraftmaschine veränderbar ist. Die Lagerung der Kraftübertragungsvorrichtung erfolgt bei einer der DE-C-921 181 offenbarten Kraftübertragungsvorrichtung mittels Wälzlager oder Nadellager, die allerdings aufgrund von unvermeidbaren Verschmutzungen nicht ausreichend verschließsicher arbeiten und darüber hinaus eine aufwendige und teure Lösung darstellen.

Aus der GB-A-857 746 ist darüber hinaus eine hydrodynamische Kraftübertragungsvorrichtung der eingangs genannten Art bekannt, bei der die Lagerstellen der Kraftübertragungsvorrichtung, der Antriebseinrichtung und gegebenenfalls auch. noch der Abtriebswelle drucköölgeschmiert sind. Dies erfolgt bei der hier offenbarten Kraftübertragungsvorrichtung mittels des dem Pumpenrad zuzuführenden Steueröles bzw. des vom Turbinenrad abzuführenden Steueröles, in dem hier der Zulauf bzw. der Ablaß derart gestaltet bzw. vorgesehen sind, daß während der Zuführung und während des Abführens des Steueröles die Lagerstellen zwangsweise durchströmt werden müssen. Durch diese Ölversorgung der Lagerstellen wird allerdings direkt in die Regelung der Übertragungsvorrichtung eingegriffen, indem beispielsweise die durch die Lagerstellen aufgebauten Strömungswiderstände im Strömungsweg der Steuerflüssigkeit das Regelergebnis beeinflussen. Des weiteren werden in den Lagerstellen auftretende Verschmutzungen über die Steuerflüssigkeit der Kraftübertragungsvorrichtung zugeführt, was sich auch in negativer Weise auf das Regelergebnis auswirken kann. Der konstruktive und bauliche Aufwand für die Ölversorgung der Lagerstellen ist darüber hinaus erheblich, so daß insgesamt die hier offenbarte hydrodynamische Kraftübertragungsvorrichtung nicht befriedigen kann.

Es ist daher Aufgabe der vorliegenden Erfindung, eine hydrodynamische Kraftübertragungsvorrichtung vorzuschlagen, die drucköölversorgte Lagerstellen aufweist, aber dennoch mit einem hinreichend genauen Regelergebnis zu arbeiten in der Lage ist. Darüber hinaus sollen in den Lagerstellen anfallende Verschmutzungen keinesfalls in die Übertragungsvorrichtung gelangen können. Zudem soll die hydrodynamische Kraftübertragungsvorrichtung mit einem möglichst geringen Kosten- und Bauaufwand herstellbar sein.

·Zur Lösung dieser Aufgabe ist die erfindungsgemäße hydrodynamische Kraftübertragungsvorrichtung dadurch gekennzeichnet, daß die Lagerstellen über einen gesonderten, von der Steuerflüssigkeitsversorgung der Kraftübertragungseinrichtung getrennten Zulauf mit Drucköl beaufschlagbar sind, daß das Pumpenrad und das Turbinenrad Abströmquerschnitte aufweisen, durch die Drucköl von zumindest im Bereich des Pumpenrades und des Turbinenrades angeordneten Lagerstellen abführbar ist sowie die Antriebseinrichtung drehbar auf der Abtriebswelle angeordnet ist. Durch die angestrebte Druckölversorgung der Lagerstellen ist hier ein Verschleiß z. B. aufgrund von Verschmutzungen praktisch auszuschließen, wobei allerdings sichergestellt ist, daß durch die Abströmquerschnitte im Turbinenrad und im Pumpenrad etwaige Verschmutzungen keinesfalls in die Übertragungsvorrichtung gelangen können. Hierdurch bietet es sich bei der erfindungsgemäßen Kraftübertragungsvorrichtung an, beispielsweise kostengünstige druckölgeschmierte Gleitlager zur Lagerung einzusetzen, die darüber hinaus den Vorteil besitzen, daß sie sehr geräuscharm arbeiten. Durch die gesonderte Zuführung von Drucköl und Steuerflüssigkeit und durch die Abströmquerschnitte im Turbinenrad und im Pumpenrad ist ferner sichergestellt, daß die Füllung der Kraftübertragungsvorrichtung durch das Drucköl der Lagerstellen nicht beeinflußt wird, so daß insgesamt das Regelergebnis keinesfalls durch die Druckölversorgung verfälscht wird. Dennoch ist es auch bei der erfindungsgemäßen hydrodynamischen Kraftübertragungsvorrichtung möglich, als Drucköl und Steueröl der Kraftübertragungsvorrichtung das gleiche Medium zu verwenden, das beispielsweise aus einem gemeinsamen Behälter abgezogen und im Gehäuse der Kraftübertragungsvorrichtung aufgefangen wird.

In Ausgestaltung der Erfindung wird vorgeschlagen, daß das Pumpenrad einen im wesentlichen kragenförmigen Absatz aufweist, der in eine im Turbinenrad vorgesehene Ausnehmung eintaucht. Diese Maßnahme stellt eine weitere Optimierung im Sinne der Trennung von Steuerflüssigkeit und Drucköl dar, so daß es nahezu ausgeschlossen ist, daß Drucköl in die Kraftübertragungsvorrichtung eindringt und das Regelergebnis verfälscht.

Der Abströmquerschnitt des Turbinenrades wird entsprechend einer Weiterbildung der Erfindung durch fensterartige Öffnungen gebildet, die im Bereich der Ausnehmung angeordnet sind. Hierdurch ist es möglich, das Turbinenrad mit dem Abströmquerschnitt rationell in einem Arbeitsgang herzustellen. Ferner können die Abströmquerschnitte derart gestaltet sein, daß sie sich in Strömungsrichtung des abfließenden Drucköls erweitern.

Eine besondere Ausgestaltung der Erfindung sieht vor, daß die Lagerstellen über in der Abtriebswelle vorgesehene Zulaufbohrungen mit Drucköl beaufschlagbar sind. Dabei ist insbesondere zu bevorzugen, die Abtriebswelle mit einer Bohrung zu versehen, die als Sammelleitung dient, von der zu den Lagerstellen mehrere Drucköllanschlußleitungen abzweigen. Diese Ausgestaltung beinhaltet neben der rationellen und kostengünstigen Herstellung den Vorteil einer platzsparenden und wartungsfreundlichen zentralen Druckölversorgung der Lagerstellen.

Ferner wird vorgeschlagen, daß am Turbinenrad ein Auflanggehäuse dichtend befestigt ist und daß der Zulauf als Zulaufdüse ausgebildet ist, wobei das Auffanggehäuse das Pumpenrad unter Belassung eines zentralen Ringraumes schalenförmig umgreift, und daß in den zentralen Ringraum die Zulaufdüse zur Zuführung der Steuerflüssigkeit einmündet, womit der Vorteil verbunden ist, daß die Zulaufdüse leicht und einfach ohne Demontage anderer Bauteile auszubauen ist.

Im folgenden wird die Erfindung anhand eines Ausführungsbeispiels näher erläutert. Es zeigen :

Figur 1 in einer geschnittenen Seitenansicht die erfindungsgemäße Kraftübertragungsvorrichtung ;

Figur 2 eine Vorderansicht entsprechend der Schnittlinie II-II in Fig. 1.

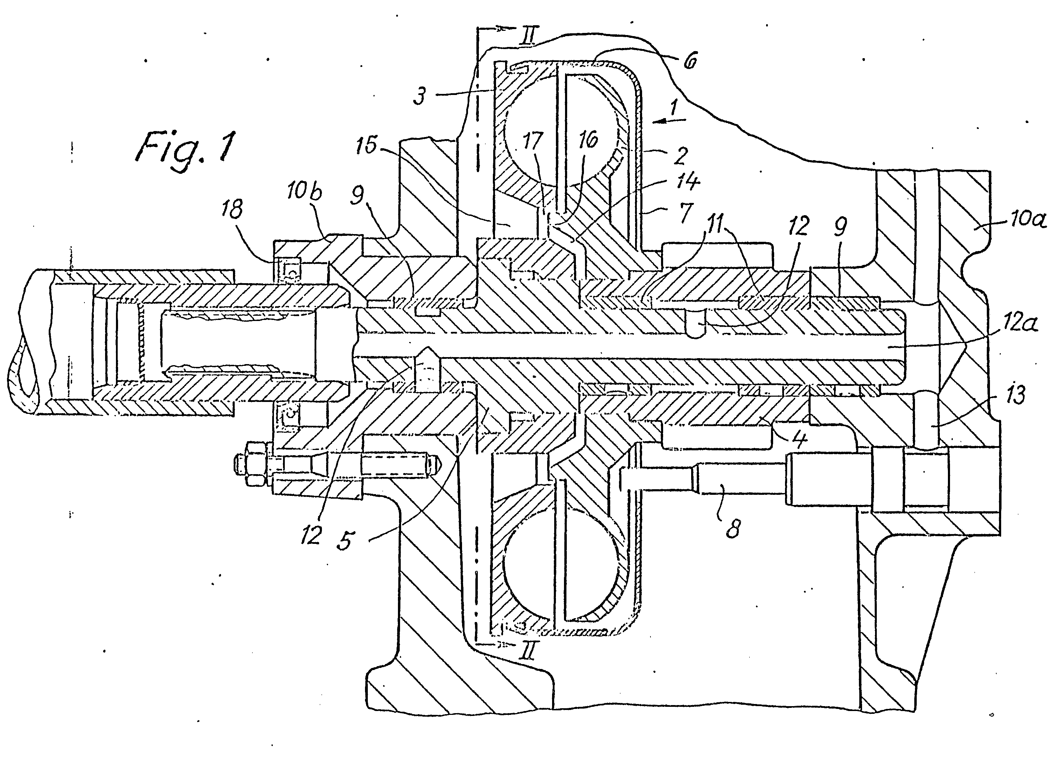

In Fig. 1 ist eine hydrodynamische Kraftübertragungsvorrichtung 1 dargestellt, die funktionsgemäß mit einem Pumpenrad 2 und einem Turbinenrad 3, einer Antriebseinrichtung 4, die als Zahnrad ausgebildet ist und z. B. von der Brennkraftmaschine angetrieben wird, und einer Abtriebwelle 5 versehen ist. Über die Abtriebswelle 5 wird ein nicht näher dargestelltes Kühlluftgebläse einer Brennkraftmaschine regelbar angetrieben. Am Turbinenrad 3 ist dichtend ein Auffanggehäuse 6 befestigt, das das Pumpenrad 2 unter Belassung eines zentralen Ringraums 7 schalenförmig umgreift und in dem nicht näher dargestellte Ablaßöffnungen zur Entleerung der Kraftübertragungsvorrichtung 1 vorgesehen sind. In den zentralen Ringraum 7 mündet die Zulaufdüse 8, über die mengenmäßig in Abhängigkeit einer charakteristischen Betriebskenngröße der Brennkraftmaschine steuerbar Steuerflüssigkeit der Kraftübertragungsvorrichtung zugeführt wird.

Die Kraftübertragungsvorrichtung 1 ist erfindungsgemäß über die Abtriebswelle 5 in mit Drucköl versorgten Lagerstellen 9, die als Gleitlager ausgebildet sind, in den Gehäuseteilen 10a, 10b gelagert. Durch die Gehäuseteile 10a, 10b wird — nicht näher dargestellt — die Kraftübertragungsvorrichtung vollständig umschlossen. Mit der Abtriebswelle 5 ist drehfest das Turbinenrad 3 verbunden. Ferner ist auf der Abtriebswelle 5 wiederum mittels Gleitlager 11 die Antriebseinrichtung 4 drehbar gelagert, an der drehfest das Pumpenrad 2 befestigt ist.

Die Abtriebswelle 5 ist mit einer Bohrung versehen, die als Sammelleitung 12a dient, von der einzelne Zulaufbohrungen 12 zu den Gleitlagern zur Zuführung des Drucköles abzweigen. Das Drucköl und die Steuerflüssigkeit wird aus einem nicht gezeigten Behälter abgezogen und über eine Zulaufleitung 13 der Sammelleitung 12a zugeführt. Um im Bereich des Turbinenrades 3 und des Pumperades 2 das zwischen der Abtriebswelle 5 und der Antriebseinrichtung 4 austretende Drucköl der Gleitlager ohne Vermischung mit der Steuerflüssigkeit abführen zu können, sind erfindungsgemäß zwischen Pumpenrad 2 und Turbinenrad 3 ein Abströmquerschnitt 14 und im Turbinenrad 3 fensterartige Öffnungen 15 als Abströmquerschnitt vorgesehen. Diese Abströmquerschnitte 14, 15 erweitern sich in Strömungsrichtung des abfließenden Drucköles der Gleitlager. Ferner weist das Pumpenrad 2 einen umlaufenden kragenförmigen Absatz 16 auf, der in eine im Turbinenrad 3 vorgesehene Ausnehmung 17 eintaucht, wodurch eine Vermischung von Steuerflüssigkeit und Drucköl nahezu ausgeschlossen ist und somit eine verfälschungsfreie Füllung der Kraftübertragungsvorrichtung gewährleistet ist. Da als Drucköl und Steuermittel das gleiche Öl verwendet wird, kann dieses gemeinsam im Gehäuse 10a, 10b aufgefangen werden. Um die gesamte Kraftübertragungsvorrichtung nach außen abzudichten, sind ferner Dichtringe 18 zwischen Abtriebswelle 5 und Gehäuseteil 10b vorgesehen.

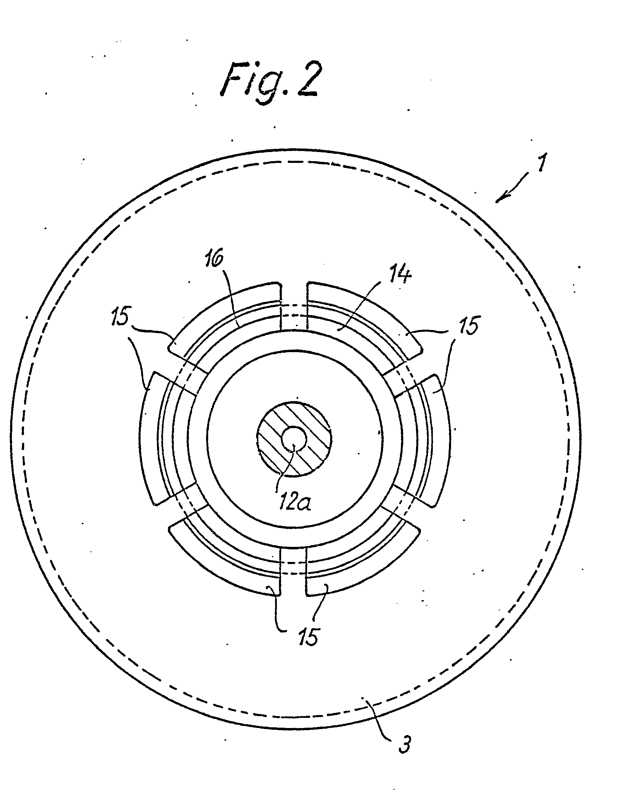

Fig. 2 zeigt eine Vorderansicht entsprechend der Schnittlinie II-II in Fig. 1. Diese Darstellung verdeutlicht die Gestaltung des Abströmquerschnittes 15 des Turbinenrades 3, der durch mehrere fensterartige Öffnungen gebildet wird.

**Patentansprüche**

1. Hydrodynamische Kraftübertragungsvorrichtung (1), die zur Füllungsregelung mit einem Zulauf (8) und mit einem Ablaß versehen ist, sowie mit einem Pumpenrad (2), das mit einer Antriebseinrichtung (4) drehfest verbunden ist, mit einem mit einer Abtriebswelle (5) drehfest verbundenen Turbinenrad (3) und mit zumindest einem Gehäuseteil (10) zur Lagerung der Kraftübertragungsvorrichtung, wobei zur Lagerung der Antriebseinrichtung und der Kraftübertragungsvorrichtung druckölversorgte Lagerstellen vorgesehen sind, dadurch gekennzeichnet, daß die Lagerstellen (9, 11) über einen gesonderten, von der Steuerflüssigkeitsversorgung der Kraftübertragungsvorrichtung (1) getrennten Zulauf (12, 12a, 13) mit Drucköl beaufschlagbar sind, daß das Pumpenrad (2) und das Turbinenrad (3) Abströmquerschnitte (14, 15) aufweisen, durch die Drucköl von zumindest im Bereich des Pumpenrades (2) und des Turbinenrades (3) angeordneten Lagerstellen (9, 11) abführbar ist, sowie die Antriebseinrichtung (4) drehbar auf der Abtriebswelle (5) angeordnet ist.

2. Hydrodynamische Kraftübertragungsvorrichtung nach Anspruch 1, dadurch gekennzeichnet, daß das Pumpenrad (2) einen im wesentlichen kragenförmigen Absatz (16) aufweist, der in eine im Turbinenrad (3) vorgesehene Ausnehmung (17) eintaucht.

3. Hydrodynamische Kraftübertragungseinrichtung nach Anspruch 1 oder 2, dadurch gekennzeichnet, daß der Abströmquerschnitt (15) des Turbinenrades (3) durch mehrere fensterartige Öffnungen gebildet wird, die im Bereich der Ausnehmung (17) angeordnet sind.

4. Hydrodynamische Kraftübertragungsvorrichtung nach einem der Ansprüche 1 bis 3, dadurch gekennzeichnet, daß die Abströmquerschnitte (14, 15) des Turbinenrades (3) und des Pumpenrades (2) sich in Strömungsrichtung des abfließendes Drucköles erweitern.

5. Hydrodynamische Kraftübertragungsvorrichtung nach einem der vorangehenden Ansprüche, dadurch gekennzeichnet, daß die Lagerstellen (9, 11) über in der Abtriebswelle (5) vorgesehene Zulaufbohrungen (12, 12a) mit Drucköl beaufschlagbar sind.

6. Hydrodynamische Kraftübertragungsvorrichtung nach einem der vorangehenden Ansprüche, dadurch gekennzeichnet, daß ein am Turbinenrad (3) dichtend befestigtes Auffanggehäuse (6) vorgesehen ist, wobei das Auffanggehäuse (6) das Pumpenrad (2) unter Belassung eines zentralen Ringraumes (7) schalenförmig umgreift, und daß der Zulauf (8) als Zulaufdüse ausgebildet ist, die in den zentralen Ringraum (7) zur Zuführung der Steuerflüssigkeit mündet.

## Claims

1. A hydrodynamic power-transmission appliance (1) which for the purpose of controlling the passage of the regulating fluid therethrough is provided with an inlet duct (8) and an outlet and which in also provided with a pump impeller (2) connected to a drive element (4) rotationally fast therewith, with a turbine wheel (3) connected to an output shaft (5) rotationally fast therewith, and with at least one casing section (10) for housing the power-transmission appliance, in which forced-lubrication bearings serve to support the drive element and the power-transmission appliance, characterized in that oil under pressure is arranged to be fed to the bearings (9, 11) through a separate inlet duct (12, 12a, 13) other than the one through which the regulating fluid is fed to the power-transmission appliance (1), that the pump impeller (2) and the turbine wheel (3) are each provided with a discharge aperture (14 and 15 respectively) through which the oil under pressure is dischargeable at least from those bearings (9, 11) that are disposed in the vicinity of the pump impeller (2) and the turbine wheel (3), and in that the drive element (4) is rotatably mounted on the output shaft (5).

2. A hydrodynamic power-transmission appliance according to claim 1, characterized in that the pump impeller (2) is provided with a substantially collar-shaped extension (16) projecting into a recess (17) of the turbine wheel (3).

3. A hydrodynamic power-transmission appliance according to claim 2, characterized in that a number of window-like orifices disposed in the vicinity of the recess (17) constitute the discharge aperture (15) of the turbine wheel (3).

4. A hydrodynamic power-transmission appliance according to any of the claims 1 to 3, characterized in that the discharge apertures (14, 15) of the turbine wheel (3) and the pump impeller (2) respectively are flared along the direction of flow of the discharged pressure oil.

5. A hydrodynamic power-transmission appliance according to any of the preceding claims, characterized in that two sections (12, 12a) of the inlet duct for the oil under pressure are bores disposed in the output shaft (5).

6. A hydrodynamic power-transmission appliance according to any of the preceding claims, characterized in that a collecting pan (6) is sealingly fastened to the turbine wheel (3) and surrounds in saucer-like fashion the pump impeller (2) separated therefrom by an annular space (7) concentric therewith, and in that the inlet duct (8) is constructed as an inlet valve terminating in the annular space (7) and serving to feed the regulating fluid thereinto.

## Revendications

1. Dispositif hydrodynamique de transmission de puissance (1) qui, pour le réglage du remplissage, est muni d'une arrivée (8) et d'une évacuation, ainsi que d'une roue de pompe (2) solidaire en rotation d'un moyen d'entraînement (4), avec une roue de turbine (3) d'un arbre de sortie (5), et avec au moins une partie de carter (10) pour le logement du dispositif de transmission de puissance, des emplacements de paliers alimentés en huile sous pression étant prévus pour le montage du moyen d'entraînement et du dispositif de transmission de puissance, dispositif caractérisé en ce que les emplacements de paliers (9, 11) sont susceptibles d'être alimentés en huile sous pression par l'intermédiaire d'une arrivée spéciale (12, 12a, 13) distincte de l'alimentation en liquide de commande du dispositif de transmission de puissance (1), la roue de pompe (2) et la roue de turbine (3) comportant des sections transversales de sortie (14, 15) à travers lesquelles l'huile sous pression est susceptible d'être évacuée tout au moins des emplacements de paliers (9, 11) disposés au voisinage de la roue de pompe (2) et de la roue de turbine (3), tandis que le moteur d'entraînement (4) est disposé en étant susceptible de tourner sur l'arbre de sortie (5).

2. Dispositif hydrodynamique de transmission de puissance selon la revendication 1, caractérisé en ce que la roue de pompe (2) comporte un épaulement (16), essentiellement en forme de collet, qui pénètre dans un évidement (17) prévu dans la roue de turbine (3).

3. Dispositif hydrodynamique de transmission de puissance selon revendication 1 ou 2, caractérisé en ce que la section de sortie (15) de la roue de turbine (3) est constituée par plusieurs orifices en forme de fenêtres disposés au voisinage de l'évidement (17).

4. Dispositif hydrodynamique de transmission de puissance selon une des revendications 1 à 3, caractérisé en ce que les sections transversales de sortie (14, 15) de la roue de turbine (3) et de la roue de pompe (2) s'élargissent dans la direction d'écoulement de l'huile sous pression évacuée.

5. Dispositif hydrodynamique de transmission de puissance selon une des précédentes revendications, caractérisé en ce que les emplacements de paliers (9, 11) sont susceptibles d'être alimentés en huile sous pression par l'intermédiaire de perçages d'arrivées (12, 12a) prévus dans l'arbre de sortie (5).

6. Dispositif hydrodynamique de transmission de puissance selon une des précédentes revendications, caractérisé en ce qu'il est prévu un boîtier collecteur (6) fixé de façon étanche sur la roue de turbine (3), ce boîtier collecteur (6) entourant, à la façon d'une coquille, la roue de pompe (2) en ménageant un espace annulaire central (7), tandis que l'arrivée (8) revêt la forme d'une buse d'arrivée qui débouche dans cet espace annulaire central (7) pour amener le liquide de commande.

Fig. 1

# *Fig.2*